# EUROPÄISCHE PATENTSCHRIFT

(11) **EP 1 360 542 B1**
(45) Veröffentlichungstag und Bekanntmachung des Hinweises auf die Patenterteilung: **24.05.2006**
(21) Anmeldenummer: 02708240.3
(22) Anmeldetag: 13.02.2002
(51) Int. Cl.: G02C 13/00, G06T 15/40, G09B 23/28

(54) **VERFAHREN ZUR DEMONSTRATION DES EINFLUSSES EINER BESTIMMTEN BRILLENFASSUNG UND DER IN DIESE BRILLENFASSUNG EINGESETZTEN OPTISCHEN GLÄSER**
METHOD FOR SIMULATING AND DEMONSTRATING THE OPTICAL EFFECTS OF GLASSES ON THE HUMAN FACE
PROCEDE POUR DEMONTRER L'INFLUENCE D'UNE MONTURE DE LUNETTES DETERMINEE ET DES VERRES OPTIQUES MONTES DANS CETTE DERNIERE

(30) Priorität: 13.02.2001 DE 10106562
(43) Veröffentlichungstag der Anmeldung: 12.11.2003
(73) Patentinhaber: Rodenstock GmbH, 80469 München (DE)
(72) Erfinder: WELK, Andrea, 81547 München (DE); ALTHEIMER, Helmut, 87650 Lauchdorf (DE); BAUMBACH, Peter, 81543 München (DE); ESSER, Gregor, 85540 Haar (DE); HAIMERL, Walter, 80337 München (DE)
(74) Vertreter: Müller-Boré & Partner Patentanwälte
(86) Internationale Anmeldenummer: PCT/DE2002/000511
(87) Internationale Veröffentlichungsnummer: WO 2002/065199

(56) Entgegenhaltungen:
- EP-A- 0 299 769
- EP-A- 0 362 123
- EP-A- 0 472 291
- WO-A-01/32074
- JP-A- 6 139 318
- US-A- 5 280 570
- US-A- 6 142 628

## Beschreibung

### Technisches Gebiet

Die Erfindung bezieht sich auf ein Verfahren zur Demonstration des Einflusses einer bestimmten Brillenfassung und der in diese Brillenfassung eingesetzten optischen Gläser auf das von einer anderen Person (virtueller Beobachter) wahrgenommene Aussehen des Brillenträgers.

### Stand der Technik

Es sind verschiedene Verfahren zur Demonstration von Brillengläsern bzw. zur Beurteilung der Eigenschaften von Brillengläsern bekannt. Zur Demonstration der optischen Eigenschaften von Brillengläsern werden häufig Isolinien-Darstellungen oder Pseudo-3-D-Darstellungen verschiedener optischer Eigenschaften von Brillengläsern, wie z. B. des Flächenastigmatismus oder des Gesamtastigmatismus, des Flächenbrechwerts oder der Wirkung sowie des Visus verwendet. Diese Darstellungen sind technischer Natur und lediglich für den Fachmann, wie z. B. für einen Augenoptiker interpretierbar.

Die EP 1 018 691 Al beschreibt ein Verfahren und eine Vorrichtung zur Simulation des Seheindrucks. Das in dieser Druckschrift beschriebenen Verfahren erlaubt es einem potentiellen Erwerber von Brillengläsern, zu beurteilen, wie er mit den in Aussicht genommenen Brillengläsern sehen wird. Eine Beurteilung seines Aussehens bei Verwendung dieser Brillengläser ist mit diesen bekannten Verfahren nicht möglich.

Die enorme technische Komplexität des Produktes Brille, d.h. einer bestimmten, von dem zukünftigen Nutzer ausgewählten Brillenfassung und der von dem Nutzer ausgewählten bzw. ihm vorgeschlagenen Brillengläser ist in der Regel nur begrenzt für den Brillenträger verständlich.

Die Auswahl der Brillenfassung bereitet dem Brillenträger in der Regel zwar keine großen Probleme, da der Brillenträger sofort sehen kann, ob ihm eine Fassung steht oder nicht. Darüber hinaus stehen bei der Fassungsauswahl diverse Hilfsmittel zur Verfügung. So ist es z.B. bekannt, den Kunden mit verschiedenen Brillenfassungen aufzunehmen, so daß der Kunde durch einen Vergleich der Fotos bzw. Video-Aufnahmen die für ihn am besten geeignete Brillenfassung auswählen kann. Diese Vorgehensweise ist insbesondere bei stark ametropen Kunden bevorzugt, da diese sich mit der neuen Fassung im Spiegel nicht gut sehen können.

Der Nachteil aller bisher auf dem Markt befindlichen Demonstrationsmittel liegt darin, daß nur die verschiedenen Brillenfassungen, nicht jedoch der Einfluß der in die Brillenfassung eingesetzten Brillengläser auf das Aussehen des Gesichts vom Kunden beurteilt werden können. Die bekannten Demonstrationsmittel erlauben nämlich nur die Beurteilung der optischen Eigenschaften, wie z. B. des. Refraktionsfehlers oder des Astigmatismus des Brillenglases, also dessen, was der Brillenträger selbst sieht, nicht jedoch des Aussehens des Brillenträgers, also wie der Brillenträger von anderen wahrgenommen wird.

Die Qualität des Brillenglases liegt aber nicht zuletzt auch darin, wie ein Brillenträger von seinem Gegenüber gesehen wird. Wird eine Brille getragen, die aufgrund einer zu stark gewählten Durchbiegung (Basiskurve) der Brillengläser zu stark vergrößert, so zeigt sich ein sogenannter "Kuhaugen-Effekt". Ein Gesicht wird verändert, wenn eine Brille getragen wird, die aufgrund einer zu geringen Durchbiegung (mittlere Krümmung der Vorderfläche der Brillengläser) großflächige Reflexe zeigt oder kleine Reflexe. Weiterhin wird das Gesicht verändert, wenn eine Brille getragen wird, die aufgrund einer unpassenden Entspiegelung unschöne Restreflexfarben zeigt oder aufgrund einer passenden Entspiegelung ästhetische Restreflexfarben.

Damit der Kunde eine Brille optimal auswählen kann, muß man sowohl die Brillenfassung als auch das in die Brillenfassung eingesetzte Brillenglas berücksichtigen.

Eine Vorrichtung bzw. ein Verfahren zur Simulation des Aussehens eines Brillenträgers mit aufgesetzter Brille unter Berücksichtigung des in der Brillenfassung eingesetzten Brillenglases ist in US 6 142 628, US 5 280 570 oder JP 06 139318 A beschrieben.

EP 0 299 769 offenbart ein Verfahren zur Bildgeneration mittels Ray-Tracing Verfahren.

### Darstellung der Erfindung

Die Aufgabe der Erfindung ist es, ein Verfahren anzugeben, das den Brillenträger beim Brillenkauf bei seiner Entscheidung für einen gewissen Glastyp und eine gewisse Entspiegelung unterstützt.

Diese Aufgabe wird durch den Patentanspruch 1 gelöst, in dem ein Verfahren zur Demonstration des Einflusses einer bestimmten Brillenfassung und der in diese Brillenfassung eingesetzten optischen Gläser auf das von einer anderen Person (virtueller Beobachter)wahrgenommene Aussehen des Brillenträgers mit den folgenden Merkmalen angegeben wird:
- ein Bild des Gesichtes eines Brillenträgers wird so bereitgestellt, daß das Bild in einem Computer bearbeitet werden kann,
- die Anordnung der jeweiligen Brillenfassung vor den Augen wird ermittelt,
- das Bild des Gesichtes wird mittels einer Hauptstrahldurchrechnung (Ray-Tracing) durch den Augendrehpunkt des (virtuellen) Beobachters in eine Ebene projiziert und so in dieser Ebene ein ebenes Bild des Gesichts erzeugt,
- bei der.Berechnung des Verlaufs der Hauptstrahlen, die innerhalb der Gläserringe der Brillenfassung bzw. der Ränder der Brillengläser liegen, wird die optische Wirkung des Bereichs, den der jeweilige Hauptstrahl durchsetzt, des jeweils (virtuell) in den jeweiligen Gläserring eingesetzten Brillenglases und dessen Anordnung vor dem Auge berücksichtigt, so daß ein Betrachter des so erzeugten ebenen Bildes des Gesichtes mit "aufgesetzter" Brille die Verzerrung der Augenpartie des Gesichts durch die Brillengläser und damit die Qualität der Brillengläser beurteilen kann.
- zusätzlich zum Berechnen nach der Hauptstrahldurchrechnung (Ray-Tracing-Verfahren) erfolgt eine Berechnung der Wellenfronten (Wave-Tracing-Verfahren), die der unscharfen Abbildung durch die Brillengläser Rechnung trägt.

Dabei erfolgt die Hauptstrahldurchrechnung in der sog. Gebrauchsstellung des Brillenglases, wobei die tatsächliche Anordnung der Brillenfassung - Vorneigung, Höhensitz, Honhaut-Scheitelabstand etc. - ermittelt und im weiteren berücksichtigt wird.

Das Bild des Gesichtes kann ein vorgegebenes Bild und insbesondere ein unter verschiedenen Standard-Bildern auswählbares Bild sein. Alternativ kann das Bild des Gesichtes ein mit einem elektronischen Bildaufnehmer aufgenommenes Bild einer Person sein. Als Bild wird dann insbesondere das Bild der Person verwendet, die sich eine Brillenfassung und/oder Brillengläser aussuchen will, wobei die Person mit aufgesetzter Brillenfassung aufgenommen wird.

Der Computer erzeugt ein Bild der Brillenfassung im Gesicht der dargestellten Person. Bei der Berechnung des Verlaufs der Hauptstrahlen, die innerhalb der Gläserringe der Brillenfassung bzw. der Ränder der Brillengläser liegen, wird die optische Wirkung des Bereichs, den der jeweilige Hauptstrahl durchsetzt, des jeweils (virtuell) in den jeweiligen Gläserring eingesetzten Brillenglases und dessen Anordnung vor dem Auge berücksichtigt, so daß ein Betrachter des so erzeugten ebenen Bildes des Gesichtes mit "aufgesetzter" Brille die Verzerrung der Augenpartie des Gesichts durch die Brillengläser und damit die Qualität der Brillengläser beurteilen kann. Insbesondere ist es damit möglich, zu beurteilen, ob der sog. Kuhaugeneffekt auftritt oder ob störende Reflexe das Aussehen beeinträchtigen.

Das Bild des Gesichts kann ein zweidimensionales Bild oder ein mit Tiefeninformation versehenes dreidimensionales Bild sein.

Bei der Verwendung eines dreidimensionalen Bildes werden verschiedene Bilder eines Gesichtes in unterschiedlichen Köpfhaltungen berechnet. Die entstandene Bilderfolge kann insbesondere als kurzer Film demonstriert werden. Von Vorteil ist es, wenn das oder die Bilder des Gesichts Pixel-Bilder sind.

Ferner ist es von Vorteil, wenn nur die Pixelpunkte an ausgewählten Gitterpunkten berechnet werden, und dazwischenliegende Pixelpunkte durch eine geeignete Methode interpoliert werden.

Das verkürzt die benötigte Zeit zum Durchrechnen und der Kunde muss nicht zu lange warten. Das entstandene Bild kann dem Kunden beispielsweise auf dem PC präsentiert werden, er kann die Effekte verschiedener Durchbiegungen und/oder Entspiegelungen auf seinem Gesicht sehen und vergleichen. Somit wird ihm der bisher nur theoretisch erklärte Nutzen visualisiert, indem ihm demonstriert wird, wie er mit einer bestimmten Brille auf sein Gegenüber wirkt.

Die Reflexion der Hauptstrahlen einer beliebig positionierbaren Blendlichtquelle von beliebiger Form wird an den Vorder- und Rückflächen der Brillengläser berechnet und die Reflexe werden je nach der von der Beschichtung und der vom Brechungsindex und der Abbe'schen Zahl des Brillenglases-Materials abhängigen Intensität und Restreflexfarbe bis in die Bildebene durchgerechnet und gezeichnet.

Die Vorrichtung zur Durchführung des oben beschriebenen Verfahrens weist eine Haltevorrichtung für das Bild, eine Haltevorrichtung für das Brillenglas, eine Blendlichtquelle, eine Haltevorrichtung für das Gesicht des virtuellen Betrachters, und einen Computer zum Berechnen der Hauptstrahlen auf.

### Kurze Beschreibung der zeichnung

Die Erfindung wird nachstehend ohne Beschränkung des allgemeinen Erfindungsgedankens unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Die einzige Figur der Zeichnung zeigt:
schematisch die optischen Komponenten für die Durchrechnung des Bildes.

### Beschreibung eines Ausführungsbeispiels

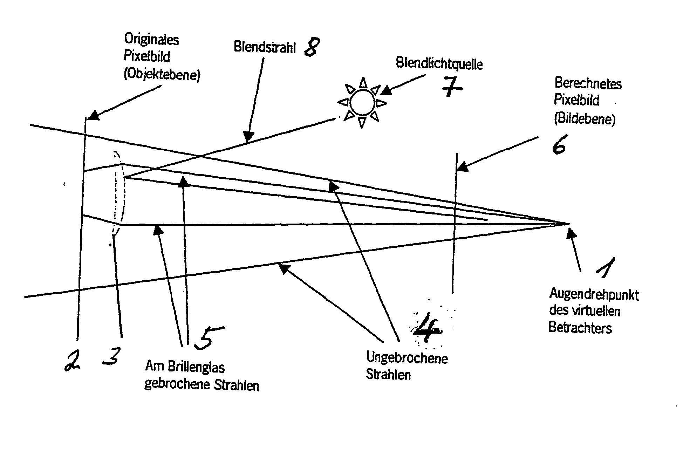

Fig. 1 erläutert die Vorgehensweise bei dem erfindungsgemäßen Verfahren zur Demonstration des Einflusses einer bestimmten Brillenfassung und der in diese Brillenfassung eingesetzten optischen Gläsern auf das von einer anderen Person (virtueller Beobachter) wahrgenommene Aussehen des Brillenträgers.

Der Augendrehpunkt des "virtuellen Beobachters" ist mit dem Bezugszeichen 1 bezeichnet. Von dem Augendrehpunkt 1 verlaufen Strahlen zu einem originalen Pixelbild 2 des Gesichts des Brillenträgers, vor dem ein bestimmtes Brillenglas 3 in Gebrauchsstellung, d.h. mit dem durch eine bestimmte Brillenfassung gegebenen Hornhaut-Scheitel-Abstand, einer bestimmten Vorneigung, Zentrierung etc. angeordnet ist. Das Pixelbild 2, das das Gesicht eines Brillenträgers darstellt, wird so bereitgestellt, daß das Bild in einem Computer bearbeitet werden kann.

Die vom Augendrehpunkt 1 des virtuellen Beobachters ausgehenden Strahlen gehen zum Teil (4) ungebrochen am Brillenglas 3 vorbei, wobei die durch das Brillenglas 3 verlaufenden Hauptstrahlen 5 an der Vorder- und der Rückfläche, d.h. insgesamt zweimal gebrochen werden. Bei der Berechnung des Verlaufs der Hauptstrahlen, die das Brillenglas 3 durchsetzen, wird optische Wirkung des jeweils (virtuell) in den jeweiligen Gläserring eingesetzten Brillenglases und dessen Anordnung vor dem Auge berücksichtigt, so daß ein Betrachter des so erzeugten ebenen Bildes des Gesichtes mit "aufgesetzter" Brille die Verzerrung der Augenpartie des Gesichts durch die Brillengläser und damit die Qualität der Brillengläser beurteilen kann.

Hierzu werden von jedem Pixel des Bildes 2 die Hauptstrahlen durch den Augendrehpunkt 1 des virtuellen Beobachters berechnet. In der Bildebene 6 entsteht das Ergebnisbild dieser Berechnung, das dem Kunden gezeigt wird. Zusätzlich kann der Einfluss einer Blendlichtquelle 7 demonstriert werden: Die Strahlen 8, die von der Blendlichtquelle 7 ausgehen, werden an den Flächen des Brillenglases 3 reflektiert und erzeugen die Reflexe in der Bildebene 6. Die Positionen aller optischen Elemente sind frei wählbar.

## Patentansprüche

1. Verfahren zur Demonstration des Einflusses einer bestimmten Brillenfassung und der in diese Brillenfassung eingesetzten optischen Gläsern auf das von einer anderen Person wahrgenommene Aussehen des Brillenträgers, mit folgenden Merkmalen:
- ein Bild des Gesichtes eines Brillenträgers (2) wird so bereitgestellt, daß das Bild in einem Computer bearbeitet werden kann,
- die Anordnung der jeweiligen Brillenfassung vor den Augen wird ermittelt,
- das Bild des Gesichtes (2) wird mittels einer Hauptstrahldurchrechnung durch den Augendrehpunkt (1) eines virtuellen Beobachters in eine Ebene projiziert und so in dieser Ebene ein ebenes Bild des Gesichts (6) erzeugt,
- bei der Berechnung des Verlaufs der Hauptstrahlen, die innerhalb der Gläserringe der Brillenfassung bzw. der Ränder der Brillengläser liegen (5), wird die optische Wirkung des Bereichs, den der jeweilige Hauptstrahl (5) durchsetzt, des jeweils virtuell in den jeweiligen Gläserring eingesetzten Brillenglases (3) und dessen Anordnung vor dem Auge berücksichtigt, so daß ein Betrachter des so erzeugten ebenen Bildes des Gesichtes (6) mit "aufgesetzter" Brille die Verzerrung der Augenpartie des Gesichts durch die Brillengläser (3) und damit die Qualität der Brillengläser (3) beurteilen kann,
- zusätzlich zum Berechnen nach der Hauptstrahldurchrechnung erfolgt eine Berechnung der Wellenfronten, die der unscharfen Abbildung durch die Brillengläser (3) Rechnung trägt.

2. Verfahren nach Anspruch1, **dadurch gekennzeichnet, daß** die Hauptstrahldurchrechnung in der sog. Gebrauchsstellung des Brillenglases (3) erfolgt.

3. Verfahren nach Anspruch 1 oder 2, **dadurch gekennzeichnet, daß** das Bild des Gesichtes (2) ein vorgegebenes Bild und insbesondere ein unter verschiedenen Standard-Bildern auswählbares Bild ist.

4. Verfahren nach Anspruch 1 oder 2, **dadurch gekennzeichnet, daß** das Bild des Gesichtes (2) ein mit einem elektronischen Bildaufnehmer aufgenommenes Bild einer Person ist.

5. Verfahren nach Anspruch 4, **dadurch gekennzeichnet, daß** als Bild des Gesichts (2) das Bild der Person verwendet wird, die sich eine Brillenfassung und/oder Brillengläser aussuchen will.

6. Verfahren nach Anspruch 4 oder 5, **dadurch gekennzeichnet, daß** die Person mit aufgesetzter Brillenfassung aufgenommen wird.

7. Verfahren nach einem der Ansprüche 1 bis 5, **dadurch gekennzeichnet, daß** der Computer das Bild der Brillenfassung im Gesicht der dargestellten Person erzeugt.

8. Verfahren nach einem der Ansprüche 1 bis 7, **dadurch gekennzeichnet, daß** das Bild des Gesichts (2) ein zweidimensionales Bild ist.

9. Verfahren nach einem der Ansprüche 1 bis 7, **dadurch gekennzeichnet, daß** das Bild des Gesichts (2) ein mit Tiefeninformation versehenes dreidimensionales Bild ist.

10. Verfahren nach Anspruch 9, **dadurch gekennzeichnet, daß** verschiedene Bilder eines Gesichtes (2) in unterschiedlichen Kopfhaltungen berechnet werden, und die entstandene Bilderfolge als kurzer Film demonstriert wird.

11. Verfahren nach einem der Ansprüche 1 bis 10, **dadurch gekennzeichnet, daß** das oder die Bilder des Gesichts (2) Pixel-Bilder sind.

12. Verfahren nach Anspruch 11, **dadurch gekennzeichnet, daß** nur die Pixelpunkte an ausgewählten Gitterpunkten berechnet werden, und daß dazwischenliegende Pixelpunkte durch eine geeignete Methode interpoliert werden.

13. Verfahren nach einem der Ansprüche 1 bis 12, **dadurch gekennzeichnet,**
**daß** die Reflexion der Hauptstrahlen einer beliebig positionierbaren Blendlichtquelle (7) von beliebiger Form an den Vorder- und Rückflächen der Brillengläser (3) berechnet wird, und
**daß** die Reflexe je nach der von der Beschichtung und der vom Brechungsindex und der Abbe'schen Zahl des Brillenglases-Materials abhängigen Intensität und Restreflexfarbe bis in die Bildebene (6) durchgerechnet und gezeichnet werden.

14. Vorrichtung mit Mitteln zur Durchführung des Verfahrens nach einem der Ansprüche 1 bis 13, **dadurch gekennzeichnet, daß** die Vorrichtung
- eine Haltevorrichtung für das Bild,
- eine Haltevorrichtung für das Brillenglas,
- eine Blendlichtquelle,
- eine Haltevorrichtung für das Gesicht des virtuellen Betrachters, und
- einen Computer zum Berechnen der Hauptstrahlen und Wellenfronten aufweist.

## Claims

1. Method for demonstrating the influence of a particular spectacle frame and of the optical lenses fitted into this spectacle frame on the appearance of the spectacle-wearer as perceived by another person, said method having the following features:
- an image of the face of a spectacle-wearer (2) is so prepared that the image can be processed in a computer,
- the arrangement of the respective spectacle frame in front of the eyes is determined,
- the image of the face (2) is projected into a plane by means of a computation of principal rays passing through the centre of rotation (1) of the eyes of a virtual observer and thus a planar image of the face (6) is produced in this plane,
- in the computation of the paths of the principal rays which lie within the lens rims of the spectacle frame or the edges of the spectacle lenses (5), the optical effect of the region, through which the respective principal ray (5) passes, of the respective spectacle lens (3) virtually fitted into the respective lens rim and its arrangement in front of the eye is taken into account such that an observer of the thus produced planar image of the face (6) "wearing" the spectacles can assess the distortion of the eyes part of the face by the spectacle lenses (3) and thus the quality of the spectacle lenses (3),
- in addition to the computing according to the ray-tracing method, there is a computation of the wave fronts, which takes account of the indistinct imaging by the spectacle lenses (3).

2. Method according to claim 1, **characterised in that** the computation of principal rays is performed in the so-called "position of use" of the spectacle lens (3).

3. Method according to claim 1 or 2, **characterised in that** the image of the face (2) is a predetermined image and especially an image which may be selected from various standard images.

4. Method according to claim 1 or 2, **characterised in that** the image of the face (2) is the image of a person recorded with an electronic image recorder.

5. Method according to claim 4, **characterised in that** the image of the person who wishes to select a spectacle frame and/or spectacle lenses is used as the image of the face (2).

6. Method according to claim 4 or 5, **characterised in that** an image is recorded of the person wearing a spectacle frame.

7. Method according to one of claims 1 to 5, **characterised in that** the computer generates the image of the spectacle frame on the face of the person represented.

8. Method according to one of claims 1 to 7, **characterised in that** the image of the face (2) is a two-dimensional image.

9. Method according to one of claims 1 to 7, **characterised in that** the image of the face (2) is a three-dimensional image provided with depth information.

10. Method according to claim 9, **characterised in that** various images of a face (2) in different head positions are computed and the resulting sequence of images is demonstrated as a short film.

11. Method according to one of claims 1 to 10, **characterised in that** the image or images of the face (2) are pixel images.

12. Method according to claim 11, **characterised in that** only the pixel points at selected grid points are computed, and **in that** intermediate pixel points are interpolated by a suitable method.

13. Method according to one of claims 1 to 12, **characterised in that** the reflection of the principal rays of an arbitrarily positioned glaring-light source (7) of arbitrary shape at the front and back surfaces of the spectacle lenses (3) is computed, and
**in that** the reflections are computed and traced as far as the image plane (6) in accordance with the intensity and residual reflection colour which depend on the coating and also on the refractive index and Abbé number of the spectacle lens material.

14. Apparatus having means for accomplishing the method according to one of claims 1 to 13,
**characterised in that** said apparatus has
- a holding device for the image,
- a holding device for the spectacle lens,
- a glaring-light source,
- a holding device for the face of the virtual observer, and
- a computer for computing the principal rays and wave fronts.

## Revendications

1. Procédé de démonstration de l'influence d'une monture de lunettes définie et des verres optiques insérés dans cette monture de lunettes sur l'apparence du porteur de lunettes perçue par une autre personne, comprenant les caractéristiques suivantes :
- une image du visage d'un porteur de lunettes (2) est mise à disposition, de sorte que l'image peut être traitée dans un ordinateur,
- la disposition de la monture de lunettes respective devant les yeux est déterminée,
- l'image du visage (2) est projetée dans un plan au moyen d'un calcul minutieux de rayon principal à travers le foyer oculaire (1) d'un observateur virtuel et ainsi une image propre du visage (6) est générée dans ce plan,
- à l'occasion du calcul du tracé des rayons principaux, qui se situent (5) à l'intérieur des anneaux en verre de la monture de lunettes et/ou des bords des verres de lunettes, l'action optique de la zone, qui est traversée par le rayon principal (5) respectif, du verre de lunettes (3) inséré respectivement virtuellement dans l'anneau de verre respectif et sa disposition devant l'oeil est prise en considération, de sorte qu'un observateur de l'image plane ainsi générée du visage (6) « portant » des lunettes peut évaluer la déformation de la partie d'oeil du visage à travers les verres de lunettes (3) et de ce fait la qualité des verres de lunettes (3),
- en plus d'effectuer le calcul minutieux de rayon principal, il s'effectue un calcul des fronts d'onde, qui tient compte de la reproduction floue à travers les verres de lunettes (3).

2. Procédé selon la revendication 1, **caractérisé en ce que** le calcul de rayon principal s'effectue dans ce qu'on appelle la position d'utilisation du verre de lunettes (3).

3. Procédé selon la revendication 1 ou 2, **caractérisé en ce que** l'image du visage (2) est une image prédéterminée et notamment une image pouvant être sélectionnée parmi différentes images standard.

4. Procédé selon la revendication 1 ou 2, **caractérisé en ce que** l'image du visage (2) est une image d'une personne enregistrée par un appareil de prises de vue électronique.

5. Procédé selon la revendication 4, **caractérisé en ce qu'**on utilise comme image du visage (2) l'image de la personne qui se choisira une monture de lunettes et/ou des verres de lunettes.

6. Procédé selon la revendication 4 ou 5, **caractérisé en ce que** la personne est prise en photo lorsqu'elle porte la monture de lunettes.

7. Procédé selon l'une quelconque des revendications 1 à 5, **caractérisé en ce que** l'ordinateur génère l'image de la monture de lunettes dans le visage de la personne représentée.

8. Procédé selon l'une quelconque des revendications 1 à 7, **caractérisé en ce que** l'image du visage (2) est une image à deux dimensions.

9. Procédé selon l'une quelconque des revendications 1 à 7, **caractérisé en ce que** l'image du visage (2) est une image en trois dimensions pourvue d'une indication de la profondeur.

10. Procédé selon la revendication 9, **caractérisé en ce que** différentes images d'un visage (2) sont calculées dans différentes positions de la tête, et la succession d'images produite est projetée sous forme de petit film.

11. Procédé selon l'une quelconque des revendications 1 à 10, **caractérisé en ce que** la ou les image(s) du visage (2) sont des images pixellisées.

12. Procédé selon la revendication 11, **caractérisé en ce qu'**on ne calcule que les pixels sur les points réticulaires sélectionnés, et **en ce que** les pixels situés entre ceux-ci sont interpolés par une méthode appropriée.

13. Procédé selon l'une quelconque des revendications 1 à 12, **caractérisé en ce que**
la réflexion des rayons principaux d'une source de lumière crue (7) de forme quelconque et pouvant être positionnée de façon quelconque est calculée sur les surfaces avant et arrière des verres de lunettes (3), et **en ce que** les reflets sont calculés minutieusement et dessinés en fonction du revêtement et de l'intensité dépendant de l'indice de réfraction et du coefficient d'Abbe du matériau du verre de lunettes et de la couleur de reflet résiduel jusque dans le plan d'image (6).

14. Dispositif doté de moyens destinés à réaliser le procédé selon l'une quelconque des revendications 1 à 13, **caractérisé en ce que** le dispositif comprend
- un dispositif de retenue pour l'image,
- un dispositif de retenue pour le verre de lunettes,
- une source de lumière crue,
- un dispositif de retenue pour le visage de l'observateur virtuel, et
- un ordinateur destiné à calculer les rayons principaux et les fronts d'onde.
